# EUROPEAN PATENT SPECIFICATION

(11) **EP 4 209 020 B1**
(45) Date of publication and mention of the grant of the patent: **29.10.2025**
(21) Application number: 21933960.3
(22) Date of filing: 01.04.2021
(51) Int. Cl.: H04W 72/30, H04W 4/06, H04L 1/08, H04L 1/1822, H04L 5/00

(54) **METHOD AND SYSTEM FOR RESOURCE CONFIGURATION**
VERFAHREN UND SYSTEM ZUR RESSOURCENKONFIGURATION
PROCÉDÉ ET SYSTÈME DE CONFIGURATION DE RESSOURCES

(43) Date of publication of application: 12.07.2023
(73) Proprietor: ZTE Corporation, Shenzhen, Guangdong 518057 (CN)
(72) Inventor: LIU, Xing, Shenzhen, Guangdong 518057 (CN); HAO, Peng, Shenzhen, Guangdong 518057 (CN); WEI, Xingguang, Shenzhen, Guangdong 518057 (CN); GOU, Wei, Shenzhen, Guangdong 518057 (CN); KOU, Shuaihua, Shenzhen, Guangdong 518057 (CN)
(74) Representative: Vossius & Partner Patentanwälte Rechtsanwälte mbB
(86) International application number: PCT/CN2021/084905
(87) International publication number: WO 2022/205301

(56) References cited:
- CN-A- 102 293 042
- US-A1- 2010 159 822
- US-A1- 2011 170 472
- MODERATOR (BBC): "Feature lead summary # 6 on RAN basic functions for broadcast/multicast for UEs in RRC_IDLE/ RRC_INACTIVE states", vol. RAN WG1, no. e-Meeting; 20210125 - 20210205, 8 February 2021 (2021-02-08), XP051977742, Retrieved from the Internet <URL:https://ftp.3gpp.org/tsg_ran/WG1_RL1/TSGR1_104-e/Docs/R1-2102180.zip R1-2102180 FL summary #6 on basic functions for idle-inactive UEs.docx> [retrieved on 20210208]
- OPPO: "Discussion on beam sweeping transmission for delivery mode 2", vol. RAN WG2, no. electronic; 20210125 - 20210205, 15 January 2021 (2021-01-15), XP051973351, Retrieved from the Internet <URL:https://ftp.3gpp.org/tsg_ran/WG2_RL2/TSGR2_113-e/Docs/R2-2100135.zip R2-2100135-Discussion on beam sweeping transmission for delivery mode 2.doc> [retrieved on 20210115]
- MODERATOR (CMCC): "Summary#8 on mechanisms to support group scheduling for RRC_CONNECTED UEs for NR MBS", vol. RAN WG1, no. e-Meeting; 20210125 - 20210205, 5 February 2021 (2021-02-05), XP051977657, Retrieved from the Internet <URL:https://ftp.3gpp.org/tsg_ran/WG1_RL1/TSGR1_104-e/Docs/R1-2102032.zip R1-2102032.docx> [retrieved on 20210205]
- MODERATOR (BBC): "Feature lead summary on RAN basic functions for broadcast/multicast for UEs in RRC_IDLE/ RRC_INACTIVE states", vol. RAN WG1, no. e-Meeting; 20210125 - 20210205, 26 January 2021 (2021-01-26), XP051975864, Retrieved from the Internet <URL:https://ftp.3gpp.org/tsg_ran/WG1_RL1/TSGR1_104-e/Docs/R1-2101721.zip R1-2101721 FL summary on basic functions for multicast-broadcast idle-inactive UEs.docx> [retrieved on 20210126]
- ZTE: "Discussion on basic Functions for Broadcast or Multicast for RRC_IDLE or RRC_INACTIVE UEs", vol. RAN WG1, no. e-Meeting; 20210125 - 20210205, 19 January 2021 (2021-01-19), XP051970813, Retrieved from the Internet <URL:https://ftp.3gpp.org/tsg_ran/WG1_RL1/TSGR1_104-e/Docs/R1-2100108.zip R1-2100108 Basic Functions for Broadcast or Multicast for RRC_IDLE or RRC_INACTIVE UEs.docx> [retrieved on 20210119]
- NOKIA, NOKIA SHANGHAI BELL: "Group Scheduling Mechanisms to Support 5G Multicast / Broadcast Services for RRC_CONNECTED UEs", 3GPP DRAFT; R1-2100510, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 18 January 2021 (2021-01-18), Mobile Competence Centre ; 650, route des Lucioles ; F-06921 Sophia-Antipolis Cedex ; France , XP051970423

## Description

### TECHNICAL FIELD

The present implementations relate generally to wireless communications, and more particularly to a method and system for resource configuration.

### BACKGROUND

The First Phase Standardization of the 5th Generation Mobile Communication Technology (5G) has a series of unicast features, specified in New Radio (NR) releases such as but not limited to, Rel-15 and Rel-16. However, no broadcast/multicast feature support has yet been specified.

3GPP R1-2102180, 3GPP R1-2101721, 3GPP R1-2100108, 3GPP R2-2100135 and 3GPP R1-2102032 are related prior art documents.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The example arrangements disclosed herein are directed to solving the issues relating to one or more of the problems presented in the prior art, as well as providing additional features that will become readily apparent by reference to the following detailed description when taken in conjunction with the accompany drawings. In accordance with various arrangements, example systems, methods, devices and computer program products are disclosed herein. It is understood, however, that these arrangements are presented by way of example and are not limiting, and it will be apparent to those of ordinary skill in the art who read the present disclosure that various modifications to the disclosed arrangements can be made while remaining within the scope of this disclosure.

Example implementations include a wireless communication method including receiving, by a wireless communication device from a base station, Multicast Broadcast Service (MBS) traffic information and MBS control information, and receiving, by the wireless communication device, MBS traffic based on the MBS traffic information and the MBS control information.

Example implementations also include a method where the MBS traffic information is received on a MBS traffic downlink resource scheduled via a MBS traffic downlink control resource, at least one of the MBS traffic downlink control resource is scrambled via a first fixed RNTI for a MBS traffic, or the MBS traffic downlink control resource is scrambled via a first dedicated RNTI configured via signaling for the MBS traffic.

Example implementations also include a method including receiving, by the wireless communication device from the base station, MBS control information, and monitoring, by the wireless communication device, the MBS traffic downlink control resource using the MBS control information.

Example implementations also include a method where the MBS control information is received on a MBS control downlink resource scheduled by a MBS control downlink control resource, at least one of the MBS control downlink control resource is scrambled via a System Information Radio Temporary Identifier (SI-RNTI), or the MBS control downlink control resource is scrambled via a second fixed RNTI for a MBS control or via a second dedicated RNTI configured via signaling for the MBS control.

Example implementations also include a method including determining, by the wireless communication device, Common Frequency Range (CFR) for the MBS control information from an initial downlink Bandwidth Part (BWP) or from signaling, wherein the CFR for the MBS control information comprises at least one of a CFR index, a starting Resource Block (RB) of the CFR, a number of RBs of the CFR, a Subcarrier Spacing (SCS), and a Cyclic Prefix (CP) type.

Example implementations also include a method including determining, by the wireless communication device, Common Frequency Range (CFR) for the MBS traffic information, wherein the CFR for the MBS traffic information is configured by the MBS control information or signaling, wherein the CFR for the MBS traffic information comprises one or more CFRs is used for receiving the MBS traffic information of different MBS traffics.

Example implementations also include a method where the MBS control information comprises a list of the one or more CFRs used to receive the MBS traffic information; and one of each of the different MBS traffics corresponds to one of the one or more CFRs, or at least one of the different MBS traffics corresponds to two or more of the one or more CFRs.

Example implementations also include a method including determining, by the wireless communication device, monitoring information of a MBS control downlink control resource via system information or signaling associated with a Common Frequency Range (CFR) for the MBS control information, where the monitoring information of the MBS control downlink control resource comprises at least one of Search Space set configuration and CORESET configuration for monitoring the MBS control downlink control resource.

Example implementations also include a method including determining, by the wireless communication device, monitoring information of a MBS traffic downlink control resource via the MBS control information or signaling associated with a Common Frequency Range (CFR) for the MBS traffic information, where the monitoring information of the MBS traffic downlink control resource comprises at least one of Search Space set configuration, CORESET configuration for monitoring the MBS traffic downlink control resource, a time-domain window configuration for monitoring the MBS traffic downlink control resource.

Example implementations also include a method including determining, by the wireless communication device, receiving configuration of a MBS control downlink resource via signaling associated with a Common Frequency Range (CFR) for the MBS control information.

Example implementations also include a method including determining, by the wireless communication device, receiving configuration of a MBS traffic downlink resource via signaling associated with a Common Frequency Range (CFR) for the MBS traffic information.

Example implementations also include a method including receiving, by the wireless communication device, at least one of a search space set and CORESET for a first system information downlink control channel, a search space set and CORESET for a second system information downlink control channel, or a search space set and CORESET for a paging downlink control channel are configured in a Common Frequency Range (CFR) for the MBS traffic information or the MBS control information, the CFR does not contain an initial downlink Bandwidth Part (BWP) or a CORESET with index 0.

Example implementations also include a method including receiving, by the wireless communication device, reference signals Quasi-Co-Located (QCLed) with Demodulation Reference Signal (DMRS) of at least one of the first system information downlink control channel, the second system information downlink control channel, or the paging downlink control channel in the CFR.

Example implementations also include a method where switching among two or more Common Frequency Ranges (CFRs) for the MBS traffic information or the MBS control information that are in a same cell contain Synchronization Signal Blocks (SSBs) with a same Physical layer Cell ID (PCI) is performed without triggering cell reselection or cell handover.

Example implementations also include a method where two or more Common Frequency Ranges (CFRs) for the MBS traffic information or the MBS control information are in a same cell, the MBS traffic comprises different MBS traffics, and one of a Hybrid Automatic Repeat Request (HARQ) process is shared by the different MBS traffics, or a CFR-specific HARQ process is used for each of the two or more CFRs.

Example implementations also include a method where the MBS traffic comprises Semi-Persistent Scheduling (SPS)-based MBS traffic, and NACK-only feedback is configured for the SPS-based MBS traffic, where the NACK-only feedback is applied to a downlink resource of the SPS-based MBS traffic without scheduling downlink control resource, ACK/NACK feedback is applied to a downlink resource of the SPS-based MBS traffic with the scheduling downlink control resource.

Example implementations also include a method where a feedback type applied to a downlink resource of the SPS-based MBS traffic with the scheduling downlink control resource can be at least one of ACK/NACK feedback, or NACK-only feedback, or a feedback type configuration of Dynamic Scheduling (DG)-based MBS transmission.

Example implementations also include a method where a feedback type applied to an activation downlink control resource can be at least one of ACK/NACK feedback, or the feedback type applied to a downlink resource of the SPS-based MBS traffic with the scheduling downlink control resource is ACK/NACK feedback, no feedback is applied to the activation downlink control resource, or the feedback type applied to a downlink resource of the SPS-based MBS traffic with the scheduling downlink control resource is NACK-only feedback, ACK/NACK feedback is applied to the activation downlink control resource.

Example implementations also include a method where a feedback type applied to a deactivation downlink control resource can be at least one of ACK/NACK feedback, or NACK-only feedback, or a feedback type configuration of Dynamic Scheduling (DG)-based MBS transmission.

Example implementations also include a wireless communication method, including sending, by a base station to a wireless communication device, Multicast Broadcast Service (MBS) traffic information and MBS control information, and sending, by the base station to the wireless communication device, MBS traffic based on the MBS traffic information and the MBS control information.

Example implementations also include a method where the MBS traffic comprises Semi-Persistent Scheduling (SPS)-based MBS traffic, and NACK-only feedback is configured for the SPS-based MBS traffic.

Example implementations also include a method including reserving a feedback resource corresponding to a downlink resource of the SPS-based MBS traffic after a deactivation downlink control resource, and retransmitting the deactivation downlink control resource in response to receive a NACK on the feedback resource corresponds to the downlink resource of the SPS-based MBS traffic after a deactivation downlink control resource.

Example implementations also include a wireless communication apparatus including at least one processor and a memory, wherein the at least one processor is configured to read code from the memory and implement a method in accordance with present implementations.

Example implementations also include a computer program product comprising a computer-readable program medium code stored thereupon, the code, when executed by at least one processor, causing the at least one processor to implement a method in accordance with present implementations.

The above and other aspects and their implementations are described in greater detail in the drawings, the descriptions, and the claims.

### BRIEF DESCRIPTION OF THE DRAWINGS

These and other aspects and features of the present implementations will become apparent to those ordinarily skilled in the art upon review of the following description of specific implementations in conjunction with the accompanying figures, wherein:
FIG. 1A is a diagram illustrating an example wireless communication network, according to various arrangements.
FIG. 1B is a diagram illustrating a block diagram of an example wireless communication system for transmitting and receiving downlink and uplink communication signals, according to various arrangements.
Fig. 2 illustrates a first example system for resource configuration, in accordance with present implementations.
Fig. 3 illustrates a second example system for resource configuration, in accordance with present implementations.
Fig. 4 illustrates a first example system for resource configuration, in accordance with present implementations.
Fig. 5 illustrates an example PUCCH overlap with the PUSCH transmission with repetition, in accordance with present implementations.
Fig. 6 illustrates an example method of resource configuration, in accordance with present implementations.
Fig. 7 illustrates an example method of resource configuration further to the example method of Fig. 6.
Fig. 8 illustrates a further example method of resource configuration, in accordance with present implementations.

### DETAILED DESCRIPTION

The present implementations will now be described in detail with reference to the drawings, which are provided as illustrative examples of the implementations so as to enable those skilled in the art to practice the implementations and alternatives apparent to those skilled in the art. Notably, the figures and examples below are not meant to limit the scope of the present implementations to a single implementation, but other implementations are possible by way of interchange of some or all of the described or illustrated elements. Moreover, where certain elements of the present implementations can be partially or fully implemented using known components, only those portions of such known components that are necessary for an understanding of the present implementations will be described, and detailed descriptions of other portions of such known components will be omitted so as not to obscure the present implementations. Implementations described as being implemented in software should not be limited thereto, but can include implementations implemented in hardware, or combinations of software and hardware, and vice-versa, as will be apparent to those skilled in the art, unless otherwise specified herein. In the present specification, an implementation showing a singular component should not be considered limiting; rather, the present disclosure is intended to encompass other implementations including a plurality of the same component, and vice-versa, unless explicitly stated otherwise herein. Moreover, applicants do not intend for any term in the specification or claims to be ascribed an uncommon or special meaning unless explicitly set forth as such. Further, the present implementations encompass present and future known equivalents to the known components referred to herein by way of illustration.

Under Multicast Broadcast Service (MBS), the same transmission mechanism can be used by the network node (e.g. a base station) for transmitting the same information to a group of UEs or all UEs in a cell. The MBS transmission can be carried on a PDSCH, which is received by the group of UEs or all UEs. The PDSCH carrying MBS information can be called a group-common PDSCH or an MBS PDSCH. Specifically, there are various network environments (e.g. channel condition) for different UEs. For improving efficiency of MBS transmission, UEs with similar network environments are expected to be classified into one UE group. Thus, in some implementations, the transmission mechanism selected can be better matched to the network environment of each UE in the UE group.

According to a group of UEs receiving a same PDSCH for a MBS information, there are different implementations for scheduling the PDSCH for the group of UEs. One example implementation uses a group-common PDCCH, where all UEs in the group can detect the same PDCCH, and the PDSCH can be scheduled by the PDCCH. Another example implementation uses a UE specific PDCCH for each of UEs in the group. More specifically, each of the UEs can detect its own PDCCH, and the different PDCCHs can schedule a same PDSCH.

For MBS information carried on group-common PDSCH and scheduled by an MBS DCI carried on group-common PDCCH, a group of UEs can receive the same MBS DCI and the corresponding MBS information.

Each UE within the group may have different requirements for its own unicast transmission and MBS transmission. Thus, in some implementations, it may not be suitable for reusing a same configuration parameters between unicast and MBS. Furthermore, there may be different configurations for unicast transmission for different UEs within the group. Thus, in some implementations, it may also be difficult to find a common configuration for MBS transmission even if the configuration parameters can be shared between unicast and MBS for one UE. Thus, it is advantageous to configure a set of parameters separate from that for unicast reception for the UEs within the group.

It is further advantageous to configure the parameters for MBS reception accordingly. In some implementations, the configuration parameters include but are not limited to: the frequency range for MBS transmission, monitoring configuration for group-common PDCCH, and reception configuration for group-common PDSCH, etc. The frequency range for MBS transmission can also be called a Common Frequency Range (CFR). In some implementations, a CFR can be defined as an BWP for MBS transmission, or an MBS specific frequency region within the unicast DL BWP. If there are more than one CFRs, the issue to be addressed also includes relationship between different CFRs.

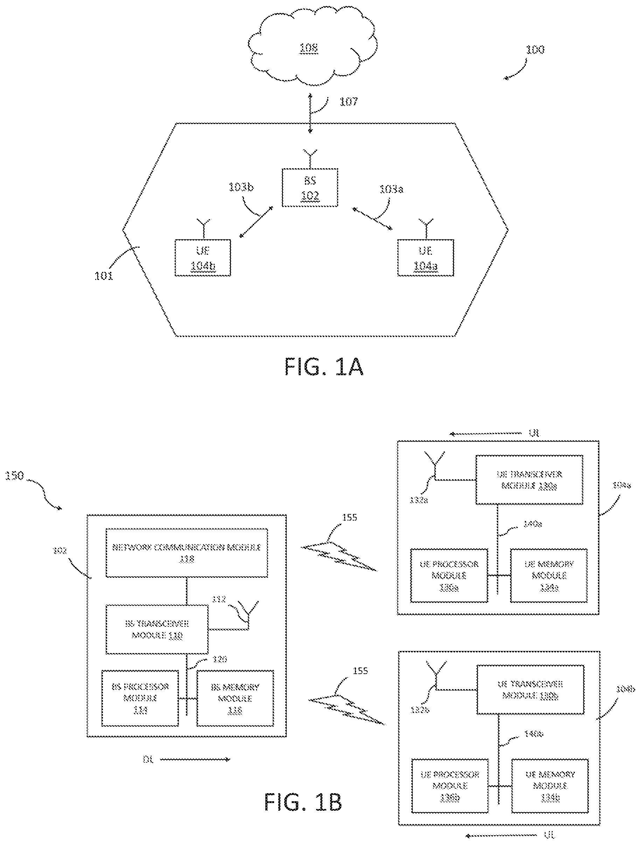

FIG. 1A shows an example wireless communication network 100. The wireless communication network 100 corresponds to a group communication within a cellular network. In the wireless communication network 100, a network side communication node or a base station (BS) can include one or more of a next Generation Node B (gNB), an E-utran Node B (also known as Evolved Node B, eNodeB or eNB), a pico station, a femto station, a Transmission/Reception Point (TRP), an Access Point (AP), or the like. A terminal side node or a user equipment (UE) can include a long range communication system (such as but not limited to, a mobile device, a smart phone, a Personal Digital Assistant (PDA), a tablet, a laptop computer) or a short range communication system (such as but not limited to, a wearable device, a vehicle with a vehicular communication system, or the like). As In FIG. 1A, a network side communication node is represented by a BS 102, and a terminal side communication node is represented by a UE 104a or 104b. In some arrangements, the BS 102 is sometimes referred to as a "wireless communication node," and the UE 104a/104b is sometimes referred to as a "wireless communication device."

As shown in FIG. 1A, the BS 102 can provide wireless communication services to the UEs 104a and 104b within a cell 101. The UE 104a can communicate with the BS 102 via a communication channel 103a. Similarly, the UE 104b can communicate with the BS 102 via a communication channel 103b. The communication channels (e.g., 103a and 103b) can be through interfaces such as but not limited to, an Uu interface which is also known as Universal Mobile Telecommunication System (UMTS) air interface. The BS 102 is connected to a Core Network (CN) 108 through an external interface 107, e.g., an Iu interface.

FIG. 1B illustrates a block diagram of an example wireless communication system 150 for transmitting and receiving downlink and uplink communication signals, in accordance with some arrangements of the present disclosure. Referring to FIGS. 1A and 1B, in the system 150, data symbols can be transmitted and received in a wireless communication environment such as the wireless communication network 100 of FIG. 1A.

The system 150 generally includes the BS 102 and UEs 104a and 104b. The BS 102 includes a BS transceiver module 110, a BS antenna 112, a BS memory module 116, a BS processor module 114, and a network communication module 118. The modules/components are coupled and interconnected with one another as needed via a data communication bus 120. The UE 104a includes a UE transceiver module 130a, a UE antenna 132a, a UE memory module 134a, and a UE processor module 136a. The modules/components are coupled and interconnected with one another as needed via a data communication bus 140a. Similarly, the UE 104b includes a UE transceiver module 130b, a UE antenna 132b, a UE memory module 134b, and a UE processor module 136b. The modules/components are coupled and interconnected with one another as needed via a data communication bus 140b. The BS 102 communicates with the UEs 104a and 104b via communication channels 155, which can be any wireless channel or other medium known in the art suitable for transmission of data as described herein.

The system 150 can further include any number of modules/elements other than the modules/elements shown in FIG. 1B. The various illustrative blocks, modules, elements, circuits, and processing logic described in connection with the arrangements disclosed herein can be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionalities. Whether such functionalities are implemented as hardware, firmware, or software depends upon the particular application and design constraints imposed on the overall system. Those familiar with the concepts described herein may implement such functionalities in a suitable manner for each particular application, but such implementation decisions should not be interpreted as limiting the scope of the present disclosure.

A wireless transmission from an antenna of each of the UEs 104a and 104b to an antenna of the BS 102 is known as an uplink transmission, and a wireless transmission from an antenna of the BS 102 to an antenna of each of the UEs 104a and 104b is known as a downlink transmission. In accordance with some arrangements, each of the UE transceiver modules 130a and 130b may be referred to herein as an uplink transceiver, or UE transceiver. The uplink transceiver can include a transmitter circuitry and receiver circuitry that are each coupled to the respective antenna 132a and 132b. A duplex switch may alternatively couple the uplink transmitter or receiver to the uplink antenna in time duplex fashion. Similarly, the BS transceiver module 110 may be herein referred to as a downlink transceiver, or BS transceiver. The downlink transceiver can include RF transmitter circuitry and receiver circuitry that are each coupled to the antenna 112. A downlink duplex switch may alternatively couple the downlink transmitter or receiver to the antenna 112 in time duplex fashion. The operations of the transceivers 110, 130a, and 130b are coordinated in time such that the uplink receiver is coupled to the antenna 132a and 132b for reception of transmissions over the wireless communication channels 155 at the same time that the downlink transmitter is coupled to the antenna 112. In some arrangements, the UEs 104a and 104b can use the UE transceivers 130a and 130b through the respective antennas 132a and 132b to communicate with the BS 102 via the wireless communication channels 155. The wireless communication channel 155 can be any wireless channel or other medium suitable for downlink (DL) and/or uplink (UL) transmission of data as described herein.

The UE transceiver 130a/130b and the BS transceiver 110 are configured to communicate via the wireless data communication channel 155, and cooperate with a suitably configured antenna arrangement that can support a particular wireless communication protocol and modulation scheme. In some arrangements, the UE transceiver 130a/130b and the BS transceiver 110 are configured to support industry standards such as the Long Term Evolution (LTE) and emerging 5G standards, or the like. It is understood, however, that the present disclosure is not necessarily limited in application to a particular standard and associated protocols. Rather, the UE transceiver 130a/130b and the BS transceiver 110 may be configured to support alternate, or additional, wireless data communication protocols, including future standards or variations thereof.

The processor modules 136a and 136b and 114 may be each implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, methods or algorithms described in connection with the arrangements disclosed herein may be embodied directly in hardware, in firmware, in a software module executed by processor modules 114, 136a, and 136b, respectively, or in any practical combination thereof. The memory modules 116, 134a, 134b can be realized as RAM memory, flash memory, ROM memory, EPROM memory, EEPROM memory, registers, a hard disk, a removable disk, a CD-ROM, or another suitable form of storage medium. In this regard, the memory modules 116, 134a, and 134b may be coupled to the processor modules 114, 136a, and 136b, respectively, such that the processors modules 114, 136a, and 136b can read information from, and write information to, the memory modules 116, 134a, and 134b, respectively. The memory modules 116, 134a, and 134b may also be integrated into their respective processor modules 114, 136a, and 136b. In some arrangements, the memory modules 116, 134a, and 134b may each include a cache memory for storing temporary variables or other intermediate information during execution of instructions to be executed by processor modules 114, 136a, and 136b, respectively. Memory modules 116, 134a, and 134b may also each include non-volatile memory for storing instructions to be executed by the processor modules 114, 136a, and 136b, respectively.

The network interface 118 generally represents the hardware, software, firmware, processing logic, and/or other components of the BS 102 that enable bi-directional communication between BS transceiver 110 and other network components and communication nodes configured to communication with the BS 102. For example, the network interface 118 may be configured to support internet or WiMAX traffic. In a typical deployment, without limitation, the network interface 118 provides an 802.3 Ethernet interface such that BS transceiver 110 can communicate with a conventional Ethernet based computer network. In this manner, the network interface 118 may include a physical interface for connection to the computer network (e.g., Mobile Switching Center (MSC)). The terms "configured for" or "configured to" as used herein with respect to a specified operation or function refers to a device, component, circuit, structure, machine, signal, etc. that is physically constructed, programmed, formatted and/or arranged to perform the specified operation or function. The network interface 118 can allow the BS 102 to communicate with other BSs or core network over a wired or wireless connection.

The BS 102 can communicate with a plurality of UEs (including the UEs 104a and 104b) using multicast or broadcast, collectively referred to as MBS. The plurality of UEs can each receive MBS channel (e.g., MBS PDSCH, MBS PDCCH, and so on) via multicast and/or broadcast. In order to receive the MBS channel, the plurality of UEs have a common understanding on the configurations of the MBS channel, including but not limited to, frequency resource range for resource allocation, scramble identifier (ID), and so on.

In some implementations of the wireless communication network 100 and the wireless communication system 150, for multicast of Radio Resource Control (RRC)-CONNECTED UEs, a common frequency resource for group-common PDCCH/PDSCH is confined within the frequency resource of a dedicated unicast Bandwidth Part (BWP) to support simultaneous reception of unicast and multicast in the same slot. Two options can be used for the common frequency resource for group-common PDCCH/PDSCH. In a first option, the common frequency resource is defined as an MBS-specific BWP, which is associated with the dedicated unicast BWP and using the same numerology (e.g., Subcarrier Spacing (SCS) and Cyclic Prefix (CP)). Accordingly, BWP switching is needed between the multicast reception in the MBS-specific BWP and unicast reception in its associated dedicated BWP.

In a second option, the common frequency resource is defined as an "MBS frequency region" with a number of contiguous PRBs, which is configured within the dedicated unicast BWP. The starting PRB and the length of PRBs of the MBS frequency region are indicated using a suitable mechanism. In the second option, a MBS BWP is used for MBS transmission, which is associated to unicast BWP. MBS BWP and unicast BWP can be used for the MBS PDSCH and unicast PDSCH transmission, which need simultaneous activation of two BWPs. The arrangements disclosed herein relate to managing the operations of two active BWPs.

As used herein, BWP refers to a portion of contiguous frequency resource in a cell. In other words, a BWP is a continuous range of frequencies that can be used for communications between a BS and UEs. Some transmission parameters and channel configurations are BWP-specific. Different UEs can have different BWP configurations. In one implementation, at most one of multiple configured BWPs can be activated due to lack of time, although at most four BWPs can be configured for a UE. In other words, for a UE, at most one active DL BWP and at most one active UL BWP at a given time can be activated for a given serving cell.

In some implementations, MBS information can be carried on a group-common PDSCH scheduled by a DCI carried on PDCCH. There are ways for group-common PDSCH scheduling. In some implementations, a DCI is carried on a group-common PDCCH, where all UEs in a group will monitor the same PDCCH for receiving the PDSCH. The CRC of the DCI carried on 'group-common PDCCH' can be scrambled by corresponding group-common RNTI configured via RRC signaling or predefined in the specification. Further, the PDSCH can be scrambled by the same group-common RNTI, or another group-common RNTI also configured by RRC signaling or predefined in the specification.

In some implementations, a DCI is carried on a UE-specific PDCCH for each of UEs in the group. In some implementations, each of the UEs can monitor its own PDCCH, and the different DCI carried on different PDCCHs can schedule a same PDSCH. The CRC of the DCI carried on 'UE specific PDCCH' is scrambled by a UE specific RNTI (e.g., C-RNTI). The DCI carried on UE specific PDCCH can also be used for scheduling PDSCH carrying a unicast information. The PDSCH can be scrambled by a group-common RNTI configured by RRC signaling or predefined in the specification. The monitoring information of 'group-common PDCCH' or 'UE specific PDCCH', such as, search space set configuration and control resource set(CORESET) configuration can be indicated in system information or UE specific RRC signaling.

In an example wireless communication system, a control resource set (CORESET) consists one or more resource blocks (RBs) in the frequency domain and one or more orthogonal frequency division multiplexing (OFDM) symbols in the time domain. One or more physical downlink control channel (PDCCH) candidates can be transmitted in a CORESET. The configuration parameters of CORESET can be configured by the network for a user equipment (UE), including CORESET index, frequency domain resource, CORESET duration, etc. One or more CORESETs may be configured for a UE for monitoring PDCCH.

In an example wireless communication system, one or more search space sets are configured by the network for a UE. The configuration parameters of a search space set include search space index, associated CORESET index, PDCCH monitoring periodicity and offset, search space duration, PDCCH monitoring pattern within a slot, search space type, etc. In some implementations, search spaces can include one or more of a UE-specific search space (USS) and common search space (CSS). A search space type also indicates the downlink control information (DCI) formats that a UE monitors.

There are different ways to define search space set type for group-common PDCCH for MBS. It is to be understood that the present implementations are not limited to the example ways disclosed below.

In a first example way, both CSS and USS are supported to configure for search space set of group-common PDCCH, and the search space set for DCI format 1_0 is defined as CSS, and the search space set for DCI format 1_x (e.g., a DCI format defined according existing DCI format 1_1 or 1_2) is defined as USS. Then, the PDCCH mapping rule is the same as existing Rel-15/16 CSS and USS, respectively. More specifically, a CSS will not be dropped, i.e., a UE will always monitor the PDCCH in a search space set with CSS type. The monitoring priority of USS is associated with the index of the search space set. for example, a lower search space set index has a higher priority. If the configured number of blind detections(BDs) or CCEs for a monitoring occasion or a span or a slot exceeds the predefined threshold, the search space set with a lower priority will be dropped until the threshold is met, i.e., the UE will not monitor some of configured search space set with lower priority.

In another example way, only CSS is supported to configure a search space set of group-common PDCCH. The monitoring priority of group-common PDCCH with DCI format 1_0 is the same as existing Rel-15/16 CSS, i.e., the group-common PDCCH with DCI format 1_0 will always be monitored. The monitoring priority of group-common PDCCH with DCI format 1_x is determined based on the search space set indexes of search space set(s) for MBS and USS sets, for example, a lower search space set index has a higher priority.

In some embodiments, the search space set type of group-common PDCCH can be configured via RRC signaling or MAC CE as either CSS or USS.

In some embodiments, the PDCCH mapping rule for search space set of group-common PDCCH can be configured via RRC signaling or MAC CE from a group of predefined rules. The predefined PDCCH mapping rules contain at least one of the following, 1. the group-common PDCCH should always be monitored by the UE; 2. the monitoring priority of group-common PDCCH is determined based on the search space set indexes of search space set(s) for MBS and USS sets.

In some embodiments, the initialization value of parameter Y(-1) for CCE index calculating will be 0 for CSS. And the initialization value of parameter Y(-1) for CCE index calculating will equal to the group-common RNTI configured or defined for MBS service.

A search space set can be associated with a CORESET. PDCCH monitoring periodicity and offset indicates the slots on which a UE can monitor PDCCH. According to a search space set configuration and the associated CORESET configuration, a UE can be configured to monitor corresponding PDCCH with DCI formats indicated by the search space type on the resources indicated by the CORESET in the slots indicated by the PDCCH monitoring periodicity and offset.

In an example wireless communication system, one or more PDCCH candidates are in one search space. Each PDCCH candidate can have a PDCCH candidate index. A PDCCH consists of one or more control-channel elements (CCEs). Each CCE can have a CCE index. In some implementations, unicast information carried on PDSCH is scheduled within an activated DL BWP (bandwidth part). For example, unicast information carried on PDSCH is scheduled with BWP index #1. In some implementations, an activated BWP is a part of carrier bandwidth used for information transmitting. A UE can be configured more than one DL BWPs, but only one of them can be activated at a certain moment. The scheduling PDCCH can also be located within the activated DL BWP. The set of parameters for unicast PDCCH monitoring and PDSCH receiving are configured under the corresponding DL BWP, e.g., via RRC signaling, PDCCH-config or PDSCH-config.

For MBS information carried on group-common PDSCH and scheduled by a MBS DCI carried on group-common PDCCH, a group of UEs can receive the same MBS DCI and the corresponding MBS information. Each UE within the group can have different requirements for its own unicast transmission and MBS transmission. Thus, in some implementations, it is not suitable for reusing same configuration parameters between unicast and MBS. Furthermore, there may be different configurations for unicast transmission for different UEs within the group. Thus, in some implementations, it is also difficult to find common configurations for MBS transmission even if the configuration parameters can be shared between unicast and MBS for one UE. It is therefore advantageous to configure a set of parameters separate from that for unicast reception for the UEs within the group.

A first example implementation describes one configuration method of MBS transmission parameters. In some implementations, the MBS transmission includes at least one of 'MBS traffic information' and 'MBS control information'. MBS traffic information can be carried on a Physical Downlink Shared Channel (PDSCH) scheduled via a Physical Downlink Control Channel (PDCCH). The PDSCH and the PDCCH are referred to as 'MBS traffic PDSCH' and 'MBS traffic PDCCH', respectively. The MBS traffic PDCCH can carry a DCI format with CRC scrambled by corresponding Radio Network Temporary Identifier (RNTI). The RTNI can be configured via Radio Resource Control (RRC) signaling or predefined in the specification. In some implementations, the physical channel 'PDSCH' carrying the MBS traffic information can be mapped with a Logical channel MBS Traffic Channel (MTCH).

In some implementations, monitoring information of MBS traffic PDCCH, such as but not limited to, search space set configuration and Control Resource Set (CORESET) configuration, time domain window configuration for monitoring MBS traffic PDCCH can be referred to as MBS control information. The MBS control information can be indicated in system information, which for example can be carried on a PDSCH scheduled via a PDCCH. The PDCCH is scrambled via System Information RNTI (SI-RNTI). Alternatively, the MBS control information can be carried on a PDSCH scheduled via a PDCCH, which is scrambled by a fixed RNTI for MBS specified in the specification or a dedicated RNTI configured via RRC signaling for this MBS traffic. The PDSCH and PDCCH used to respectively carry and schedule the MBS control information can be referred to as 'MBS control PDSCH' and 'MBS control PDCCH', respectively. The CORESET for MBS traffic PDCCH and MBS control PDCCH can be configured separately, or share a same CORESET configuration. The search space set of MBS traffic PDCCH and MBS control PDCCH can be configured separately, or share a same search space set configuration (e.g., configured jointly).

In some implementations, the physical channel PDSCH carrying the MBS control information is mapped with a Logical channel MBS Control Channel (MCCH) or a Broadcast Control Channel (BCCH).

In some implementations, at least one of the following information can be configured or defined for MBS transmission: CFR for MBS control information, CFR for MBS traffic information, monitoring information of MBS control PDCCH, monitoring information of MBS traffic PDCCH, receiving configuration of MBS control PDSCH, and receiving configuration of MBS traffic PDSCH.

In some implementations, configuration information of CFR for MBS control information includes at least one of the following parameters: CFR index, starting RB of the CFR, number of RBs of the CFR, subcarrier spacing (SCS), and CP type. In some implementations, CFR for MBS control information equals initial DL BWP or can be configured by system information block x (SIBx). The initial DL BWP can be defined by CORESET#0, where the initial DL BWP has a same bandwidth, subcarrier spacing and CP length with CORESET#0. The initial DL BWP can also be configured by system information block 1(SIB1).

In some implementations, CFR for MBS traffic information can be configured by MBS control information. One or more CFRs can be configured for transmitting MBS traffic information of different MBS traffics. Thus, different MBS traffic information can be transmitted in a same or different CFRs. In some implementations, the MBS control information contains a list of CFRs for MBS traffic information, and the MBS traffics to be transmitted in each CFR. Four example CFRs, i.e., CFR#1, CFR#2, CFR#3 and CFR#4 are shown by way of example in Table 1. For each example CFR, the configuration information includes at least one of the following parameters: CFR index, starting RB of the CFR, number of RBs of the CFR, subcarrier spacing (SCS), and CP type. Furthermore, the index of MBS traffic transmitted in this CFR is also indicated. For example, MBS traffic #1 and MBS traffic#3 are transmitted in CFR#1. The MBS traffic index can also be the RNTI corresponding to the MBS traffic.

In some implementations, the MBS control information contains a list of CFRs for MBS traffic information. For each CFR, the configuration information includes at least one of the following parameters: CFR index, starting RB of the CFR, number of RBs of the CFR, subcarrier spacing (SCS), and CP type. Furthermore, a list of the index of MBS traffic transmitted in this CFR is also indicated. For example, MBS traffic #1 and MBS traffic #3 are transmitted in CFR#1 as shown in Table 1.

**Table 1**

| CFR index | MBS traffic index |
|---|---|
| CFR# 1 | MBS traffic #1 |
| | MBS traffic #3 |
| CFR#2 | MBS traffic #2 |
| CFR#3 | MBS traffic #4 |
| CFR#4 | MBS traffic #5 |

In some implementations, a same MBS traffic can also be transmitted in more than one CFRs. As an example shown in Table 2, MBS traffic #1 is transmitted in both CFR#1 and CFR#3. UEs interested in both MBS traffic #1 and MBS traffic #3, can operate at CFR#1, while UEs that interested in both MBS traffic #1 and MBS traffic #4 can operate at CFR#3. In this way, different UEs with different requirements can be satisfied without switching between different CFRs.

**Table 2**

| CFR index | MBS traffic index |
|---|---|
| CFR#1 | MBS traffic #1 |
| | MBS traffic #3 |
| CFR#2 | MBS traffic #2 |
| CFR#3 | MBS traffic #1 |
| | MBS traffic #4 |
| CFR#4 | MBS traffic #5 |

The monitoring information of MBS control PDCCH can be configured by system information block y(SIBy), or RRC signaling under the CFR of the MBS control information. The SIBy can be same or different with SIBx.. As one example, RRC signaling can be PDCCH-configcommon or PDCCH-config. In some implementations, the monitoring information of MBS control PDCCH contains at least one of search space set configuration and CORESET configuration for monitoring MBS control PDCCH.

The monitoring information of MBS traffic PDCCH can be configured by MBS control information or by RRC signaling(e.g., PDCCH-configcommon or PDCCH-config) associated with the CFR of the MBS traffic information. In some implementations, the monitoring information of MBS traffic PDCCH contains at least one of search space set configuration, CORESET configuration, time domain window configuration for monitoring MBS traffic PDCCH. In some implementations, time domain window configuration contains at least one of the following parameters, period of the time domain window, length of the time domain window, starting point of the time domain window. The starting point of the time domain window can be an offset value in terms of at least one of slot, subframe, half-frame, frame or millisecond.

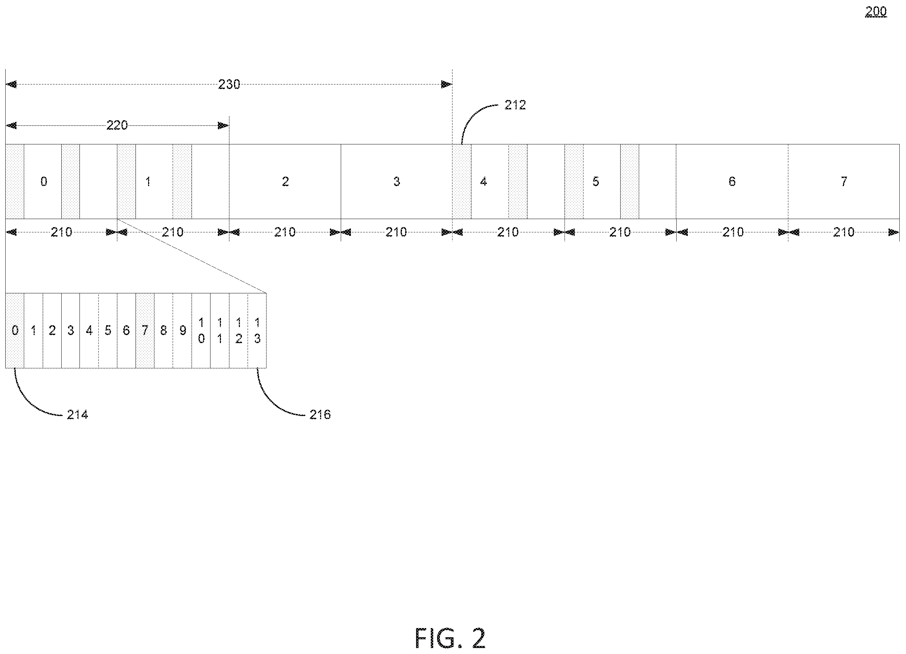

Fig. 2 illustrates a first example system for resource configuration, in accordance with present implementations. As illustrated by way of example in Fig. 2, an example system 200 includes a plurality of slots 210, a plurality of monitoring occasions (MO) including 212 and 214, at least one OFDM symbol 216, a search space 220 having an example duration of 2 slots, two monitoring occasions within each of the 2 slots per PDCCH monitoring periodicity, and a PDCCH monitoring periodicity having an example duration of 4 slots.

Fig. 2 is diagram illustrating an example of configuration of PDCCH monitoring occasion. Eight slots are illustrated overall (denoted by slot 0~7). PDCCH monitoring periodicity is 4 slots and offset is 0. The search space duration is 2 slots. It is configured that 2 PDCCH monitoring occasions (MOs) in a slot. Therefore, there are totally 4 MOs within one PDCCH monitoring period. On each of MOs, there are one resource configured by CORESET for UE to monitor PDCCH.

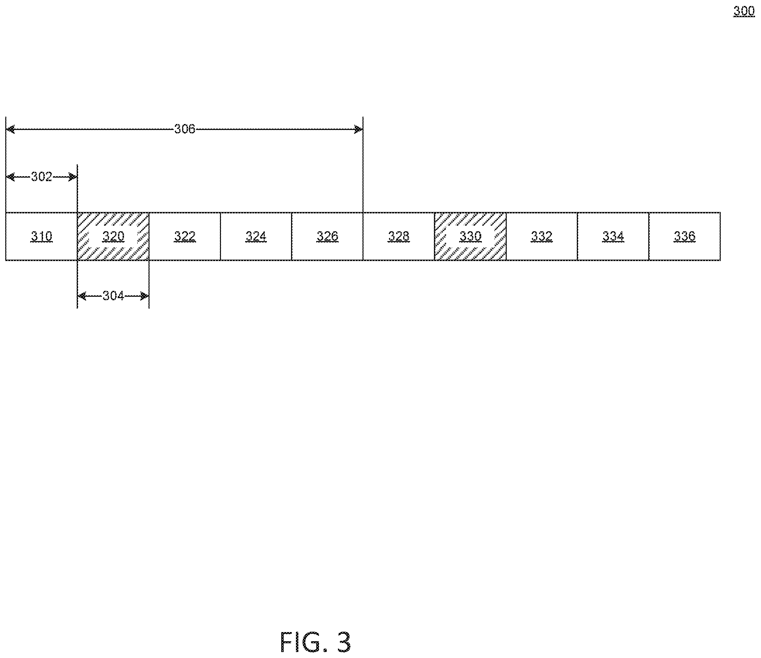

Fig. 3 illustrates a second example system for resource configuration, in accordance with present implementations. As illustrated by way of example in Fig. 3, an example system 300 includes a plurality of radio frames 310, 320, 322, 324, 326, 328, 330, 332, 334 and 336 with an example offset 302, length 304, and period 306. As one example, the time domain window is configured in units of radio frame and period = 5, offset = 1, length = 1.

The receiving configuration of MBS control PDSCH can be configured by RRC signaling (e.g., PDSCH-configcommon or PDSCH-config) under the CFR of the MBS control PDSCH. The receiving configuration of MBS traffic PDSCH can be configured by RRC signaling(e.g., PDSCH-configcommon or PDSCH-config) under the CFR of the MBS traffic PDSCH.

As one example, the MBS control information and the MBS traffic information can share a same CFR, and the CFR equals to initial DL BWP. The monitoring information of MBS control PDCCH can be configured by system information block y(SIBy). The monitoring information of MBS traffic PDCCH can be configured by MBS control information. The receiving configuration of MBS control PDSCH can be configured by RRC signaling (e.g., PDSCH-configcommon or PDSCH-config) associated with the CFR of the MBS control information(i.e., initial DL BWP). The receiving configuration of MBS traffic PDSCH can be configured by RRC signaling (e.g., PDSCH-configcommon or PDSCH-config) associated with the CFR of the MBS traffic information(i.e., initial DL BWP).

As another example, the MBS control information and the MBS traffic information can share a same CFR, and the CFR equals to initial DL BWP. The monitoring information of MBS control PDCCH is configured through RRC signaling (e.g., PDCCH-configcommon or PDCCH-config) associated with the CFR of the MBS control information(i.e., initial DL BWP). The monitoring information of MBS traffic PDCCH can be configured by MBS control information. The receiving configuration of MBS control PDSCH can be configured by RRC signaling (e.g., PDSCH-configcommon or PDSCH-config) associated with the CFR of the MBS control information (i.e., initial DL BWP). The receiving configuration of MBS traffic PDSCH can be configured by RRC signaling (e.g., PDSCH-configcommon or PDSCH-config) associated with the CFR of the MBS traffic information (i.e., initial DL BWP).

As another example, the MBS control information and the MBS traffic information can share a same CFR, and the CFR is configured by system information block x(SIBx). The monitoring information of MBS control PDCCH can be configured by system information block y(SIBy). The SIBy can be same or different with SIBx. The monitoring information of MBS traffic PDCCH can be configured by MBS control information. The receiving configuration of MBS control PDSCH can be configured by RRC signaling(e.g., PDSCH-configcommon or PDSCH-config) associated with the CFR of the MBS control information. The receiving configuration of MBS traffic PDSCH can be configured by RRC signaling(e.g., PDSCH-configcommon or PDSCH-config) associated with the CFR of the MBS traffic information.

As another example, the MBS control information and the MBS traffic information can share a same CFR, and the CFR can be configured by system information block x(SIBx). The monitoring information of MBS control PDCCH is configured through RRC signaling (e.g., PDCCH-configcommon or PDCCH-config) associated with the CFR of the MBS control information. The monitoring information of MBS traffic PDCCH can be configured by MBS control information. The receiving configuration of MBS control PDSCH can be configured by RRC signaling (e.g., PDSCH-configcommon or PDSCH-config) associated with the CFR of the MBS control information. The receiving configuration of MBS traffic PDSCH can be configured by RRC signaling (e.g., PDSCH-configcommon or PDSCH-config) associated with the CFR of the MBS traffic information.

As another example, the CFR for MBS control information can be configured by a system information block x(SIBx). The CFR for MBS traffic information can be configured by MBS control information. The monitoring information of MBS control PDCCH can be configured by system information block y(SIBy). The SIBy can be the same or different from SIBx. The monitoring information of MBS traffic PDCCH can be configured by MBS control information. The receiving configuration of MBS control PDSCH can be configured by RRC signaling(e.g., PDSCH-configcommon or PDSCH-config) associated with the CFR of the MBS control information. The receiving configuration of MBS traffic PDSCH can be configured by RRC signaling(e.g., PDSCH-configcommon or PDSCH-config) associated with the CFR of the MBS traffic information.

As another example, the CFR for MBS control information can be configured by system information block x(SIBx). The CFR for MBS traffic information can be configured by MBS control information. The monitoring information of MBS control PDCCH can be configured through RRC signaling (e.g., PDCCH-configcommon or PDCCH-config) associated with the CFR of the MBS control information. The monitoring information of MBS traffic PDCCH can be configured by MBS control information. The receiving configuration of MBS control PDSCH can be configured by RRC signaling (e.g., PDSCH-configcommon or PDSCH-config) associated with the CFR of the MBS control information. The receiving configuration of MBS traffic PDSCH can be configured by RRC signaling (e.g., PDSCH-configcommon or PDSCH-config) associated with the CFR of the MBS traffic information.

As another example, the CFR for MBS control information can equal an initial DL BWP. The CFR for MBS traffic information can be configured by MBS control information. The monitoring information of MBS control PDCCH can be configured by system information block y(SIBy). The monitoring information of MBS traffic PDCCH can be configured by MBS control information. The receiving configuration of MBS control PDSCH can be configured by RRC signaling (e.g., PDSCH-configcommon or PDSCH-config) associated with the CFR of the MBS control information (i.e., initial DL BWP). The receiving configuration of MBS traffic PDSCH can be configured by RRC signaling (e.g., PDSCH-configcommon or PDSCH-config) associated with the CFR of the MBS traffic information (i.e., initial DL BWP).

As another example, the CFR for MBS control information can equal am initial DL BWP. The CFR for MBS traffic information can be configured by MBS control information. The monitoring information of MBS control PDCCH can be configured through RRC signaling (e.g., PDCCH-configcommon or PDCCH-config) associated with the CFR of the MBS control information (i.e., initial DL BWP). The monitoring information of MBS traffic PDCCH can be configured by MBS control information. The receiving configuration of MBS control PDSCH can be configured by RRC signaling (e.g., PDSCH-configcommon or PDSCH-config) associated with the CFR of the MBS control information(i.e., initial DL BWP). The receiving configuration of MBS traffic PDSCH can be configured by RRC signaling (e.g., PDSCH-configcommon or PDSCH-config) associated with the CFR of the MBS traffic information.

As another example, there can be no MBS control information. The CFR for MBS traffic information can be configured by system information block x(SIBx). The monitoring information of MBS traffic PDCCH can be configured by RRC signaling (e.g., PDCCH-configcommon or PDCCH-config) associated with the CFR of the MBS traffic information. The receiving configuration of MBS traffic PDSCH can be configured by RRC signaling (e.g., PDSCH-configcommon or PDSCH-config) associated with the CFR of the MBS traffic information.

As another example, the CFR for MBS control information can be configured by system information block x(SIBx). The CFR for MBS traffic information can be configured by MBS control information. The monitoring information of MBS control PDCCH can be configured by system information block y(SIBy). The SIBy can be the same or different from SIBx. The monitoring information of MBS traffic PDCCH can be configured through RRC signaling (e.g., PDCCH-configcommon or PDCCH-config) associated with the CFR of the MBS traffic information. The receiving configuration of MBS control PDSCH can be configured by RRC signaling (e.g., PDSCH-configcommon or PDSCH-config) associated with the CFR of the MBS control information. The receiving configuration of MBS traffic PDSCH can be configured by RRC signaling (e.g., PDSCH-configcommon or PDSCH-config) associated with the CFR of the MBS traffic information.

As another example, the CFR for MBS control information can be configured by a system information block x(SIBx). The CFR for MBS traffic information can be configured by MBS control information. The monitoring information of MBS control PDCCH can be configured through RRC signaling(e.g., PDCCH-configcommon or PDCCH-config) associated with the CFR of the MBS control information. The monitoring information of MBS traffic PDCCH can be configured through RRC signaling (e.g., PDCCH-configcommon or PDCCH-config) associated with the CFR of the MBS traffic information. The receiving configuration of MBS control PDSCH can be configured by RRC signaling (e.g., PDSCH-configcommon or PDSCH-config) associated with the CFR of the MBS control information. The receiving configuration of MBS traffic PDSCH can be configured by RRC signaling(e.g., PDSCH-configcommon or PDSCH-config) associated with the CFR of the MBS traffic information.

A second example implementation describes one configuration method of CFR for MBS transmission. Where a CFR for MBS control information or MBS traffic information does not contain the initial DL BWP, at least one of the following configurable information can be configured under the CFR. As one example, these configurable information include a search space set and a CORESET for SIB1 PDCCH (i.e., DCI format with CRC scrambled by SI-RNTI), a search space set and a CORESET for SIBx PDCCH (i.e., DCI format with CRC scrambled by SI-RNTI), a search space set and a CORESET for paging PDCCH (i.e., DCI format with CRC scrambled by P-RNTI). The SIBx is used for indicating MBS related configuration information. The reference signals QCLed with DMRS of SIB1/SIBx/paging PDCCH or SIB1/SIBx/paging PDSCH (i.e., scheduled by SIB1/SIBx/paging PDCCH, respectively) can be transmitted within the CFR. The reference signals can be SSBs (Synchronization signal and PBCH block) or CSI-RSs. In some implementations, the CFRs containing the SSBs with the same PCI can be regarded as the same cell. There can be no cell re-selection or cell handover is performed by the UE when CFR switching occurs among those CFRs. Thus, CFRs under a same cell can contain the SSBs with the same PCI.

A third example implementation describes one configuration method of CFR for MBS transmission. In some implementations, a configuration defines a certain HARQ process or a CFR specific HARQ process for MBS transmission. For the case that there are more than one CFRs in one cell, a certain HARQ process can be shared by different MBS traffics transmitted in different CFRs if a UE is required to receive different MBSs in different CFRs in a TDM manner. For the case that there are more than one CFRs in one cell, a CFR specific HARQ process can be defined if a UE receiving different MBSs in different CFRs simultaneously.

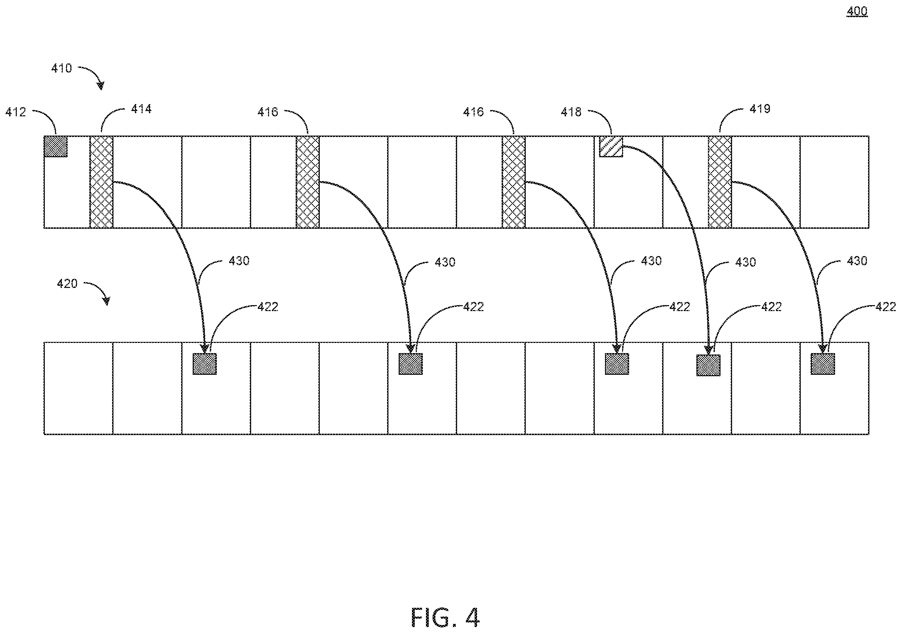

Fig. 4 illustrates a first example system for resource configuration, in accordance with present implementations. As illustrated by way of example in Fig. 4, an example system 400 includes an example downlink slot group 410, an example uplink slot group 420, and a plurality of feedback states 430. The downlink slot group 410 includes an activation PDCCH 412, a PDSCH 414 with a scheduling PDCCH, a plurality of PDSCH 416 without a scheduling PDCCH, a deactivation PDCCH 418, and a PDSCH resource 419 after the deactivation PDCCH. The uplink slot group 420 includes a plurality of feedback resources 422.

A fourth example implementation describes one configuration method of SPS-based MBS transmission parameters. In SPS (Semi-persistent scheduling)-based MBS transmission mode, one or more SPS transmission configuration can be configured via RRC signaling, and a PDCCH can be used for activating the SPS-based MBS transmission. The PDCCH can be called as activation PDCCH. The PDSCH can be transmitted according to the SPS transmission configuration. As one example, the first PDSCH after activation PDCCH can be defined as 'PDSCH with scheduling PDCCH'. A PDSCH other than the first one after the activation PDCCH and located between the activation PDCCH and the deactivation PDCCH can be called as 'PDSCH without scheduling PDCCH'.

The HARQ-ACK feedback type for PDSCH carrying MBS control information or MBS traffic information can be configured via UE specific RRC signal or SIBx. The HARQ-ACK feedback type for PDSCH carrying MBS traffic information can also be configured by MBS control information. There are two types of HARQ-ACK feedback as follows. For ACK/NACK feedback, the UE can feedback 'ACK' to the network where the UE has successfully received a MBS TB scheduled by PDCCH. Thus, the UE can receive both PDCCH and PDSCH correctly. In some implementations, the UE will feedback 'NACK' to the network if it fails to receive the MBS TB scheduled by PDCCH. The above ACK/NACK feedback information can be transmitted in a indicated resource (a PUCCH or piggybacked on a PUSCH). The feedback resource can be a UE-specific resource, including but not limited to, for a same MBS TB. Different UEs can be indicated/configured with independent resources.

For NACK-only feedback, the UE can feedback 'NACK' only if it fail to receive the MBS TB scheduled by PDCCH. As one example, the UE can receive the PDCCH but fail to decode the corresponding PDSCH. The feedback resource can be a group common resource. Thus, in some implementations, a same feedback resource will be shared among a group of UEs receiving the same PDSCH (carrying MBS TB). In case that NACK-only feedback is configured for SPS-based MBS transmission and there is no feedback for activation PDCCH, if a UE is failed to decode the activation PDCCH, the UE can not further receive the PDSCH activated by the activation PDCCH, and there can be no feedback for the PDSCH. Thus, in some implementations, the network may not find the UE that has not received the PDSCH correctly. For avoiding this state, the application of feedback type can be defined by way of nonlimiting example as follows.

In some implementations, the NACK-only feedback is applied to a downlink resource of the SPS-based MBS traffic without scheduling downlink control resource. The feedback type applied to a downlink resource of the SPS-based MBS traffic with the scheduling downlink control resource can be at least one of: ACK/NACK feedback; NACK-only feedback; or a feedback type configuration of Dynamic Scheduling (DG)-based MBS transmission. The feedback type applied to a activation downlink control resource can be at least one of: ACK/NACK feedback; or the feedback type applied to the downlink resource of the SPS-based MBS traffic with the scheduling downlink control resource is ACK/NACK feedback, no feedback is applied to an activation downlink control resource; or the feedback type applied to the downlink resource of the SPS-based MBS traffic with the scheduling downlink control resource is NACK-only feedback, ACK/NACK feedback is applied to the activation downlink control resource. The feedback type applied to a deactivation downlink control resource can be at least one of: ACK/NACK feedback; or NACK-only feedback; or a feedback type configuration of Dynamic Scheduling (DG)-based MBS transmission.

More details are showed in Table 3 and described in the following discussion.

**Table 3**

| | **Activation PDCCH** | **PDSCH with scheduling PDCCH** | **PDSCH without scheduling PDCCH** | **Deactivation PDCCH** |
|---|---|---|---|---|
| **1** | No feedback | ACK/NACK | NACK-only | NACK-only |
| **2** | No feedback | ACK/NACK | NACK-only | ACK/NACK |
| **3** | No feedback | DG | NACK-only | NACK-only |
| **4** | No feedback | DG | NACK-only | ACK/NACK |
| **5** | No feedback | DG | NACK-only | DG |
| **6** | ACK/NACK | NACK-only | NACK-only | NACK-only |
| **7** | ACK/NACK | NACK-only | NACK-only | ACK/NACK |
| **8** | ACK/NACK | DG | NACK-only | NACK-only |
| **9** | ACK/NACK | DG | NACK-only | ACK/NACK |
| **10** | ACK/NACK | DG | NACK-only | DG |
| **11** | No feedback/ACK/NACK | DG | NACK-only | NACK-only |
| **12** | No feedback/ACK/NACK | DG | NACK-only | ACK/NACK |
| **13** | No feedback/ACK/NACK | DG | NACK-only | DG |

In some implementations, if NACK-only feedback is configured for SPS-based MBS transmission, the NACK-only feedback can only be applied to the PDSCH without scheduling PDCCH and the deactivation PDCCH. There can be no feedback for the activation PDCCH, and ACK/NACK feedback can be applied to the PDSCH with scheduling PDCCH.

In some implementations, if NACK-only feedback is configured for SPS-based MBS transmission, the NACK-only feedback can only be applied to the PDSCH without scheduling PDCCH. There can be no feedback for the activation PDCCH, and ACK/NACK feedback will be applied to the PDSCH with scheduling PDCCH and the deactivation PDCCH.

In some implementations, if NACK-only feedback can be configured for SPS-based MBS transmission, the NACK-only feedback will only be applied to the PDSCH without scheduling PDCCH and the deactivation PDCCH. There can be no feedback for the activation PDCCH, and the feedback type for PDSCH with scheduling PDCCH cam follow the HARQ-ACK feedback type configuration of DG(dynamic scheduling)-based MBS transmission.

In some implementations, if NACK-only feedback can be configured for SPS-based MBS transmission, the NACK-only feedback will only be applied to the PDSCH without scheduling PDCCH. There can be no feedback for the activation PDCCH, and the feedback type for PDSCH with scheduling PDCCH can follow the HARQ-ACK feedback type configuration of DG(dynamic scheduling)-based MBS transmission. ACK/NACK feedback can be applied to the deactivation PDCCH.

In some implementations, if NACK-only feedback can be configured for SPS-based MBS transmission, the NACK-only feedback will only be applied to the PDSCH without scheduling PDCCH. There can be no feedback for the activation PDCCH, and the feedback type for PDSCH with scheduling PDCCH and the deactivation PDCCH can follow the HARQ-ACK feedback type configuration of DG(dynamic scheduling)-based MBS transmission.

In some implementations, if NACK-only feedback can be configured for SPS-based MBS transmission, the NACK-only feedback can be applied to the PDSCH with or without scheduling PDCCH and the deactivation PDCCH. Thus, in some implementations, ACK/NACK feedback can be applied to the activation PDCCH.

In some implementations, if NACK-only feedback can be configured for SPS-based MBS transmission, the NACK-only feedback can be applied to the PDSCH with or without scheduling PDCCH. ACK/NACK feedback can be applied to the activation PDCCH and the deactivation PDCCH.

In some implementations, if NACK-only feedback is configured for SPS-based MBS transmission, the NACK-only feedback can only be applied to the PDSCH without scheduling PDCCH and the deactivation PDCCH. The feedback type for PDSCH with scheduling PDCCH can follow the HARQ-ACK feedback type configuration of DG (dynamic scheduling)-based MBS transmission, and ACK/NACK feedback can be applied to the activation PDCCH.

In some implementations, if NACK-only feedback is configured for SPS-based MBS transmission, the NACK-only feedback can only be applied to the PDSCH without scheduling PDCCH. The feedback type for PDSCH with scheduling PDCCH can follow the HARQ-ACK feedback type configuration of DG (dynamic scheduling)-based MBS transmission, and ACK/NACK feedback can be applied to the activation PDCCH and the deactivation PDCCH.

In some implementations, if NACK-only feedback is configured for SPS-based MBS transmission, the NACK-only feedback can only be applied to the PDSCH without scheduling PDCCH. The feedback type for PDSCH with scheduling PDCCH and the deactivation PDCCH can follow the HARQ-ACK feedback type configuration of DG (dynamic scheduling)-based MBS transmission, and ACK/NACK feedback can be applied to the activation PDCCH.

In some implementations, if NACK-only feedback is configured for SPS-based MBS transmission, the NACK-only feedback can only be applied to the PDSCH without scheduling PDCCH and the deactivation PDCCH. The feedback type for PDSCH with scheduling PDCCH will follow the HARQ-ACK feedback type configuration of DG (dynamic scheduling)-based MBS transmission. In some implementations, if ACK/NACK feedback is applied to the PDSCH with scheduling PDCCH, there can be no feedback for the activation PDCCH. If NACK-only feedback is applied to the PDSCH with scheduling PDCCH, ACK/NACK feedback can be applied to the activation PDCCH.

In some implementations, if NACK-only feedback is configured for SPS-based MBS transmission, the NACK-only feedback can be applied only to the PDSCH without scheduling PDCCH. In some implementations, ACK/NACK feedback can be applied to the deactivation PDCCH. The feedback type for PDSCH with scheduling PDCCH will follow the HARQ-ACK feedback type configuration of DG(dynamic scheduling)-based MBS transmission. If ACK/NACK feedback can be applied to the PDSCH with scheduling PDCCH, there can be no feedback for the activation PDCCH. If NACK-only feedback can be applied to the PDSCH with scheduling PDCCH, ACK/NACK feedback will be applied to the activation PDCCH.

In some implementations, if NACK-only feedback is configured for SPS-based MBS transmission, there is no feedback for deactivation PDCCH. As one example, a NACK-only feedback resource that corresponds to the PDSCH after the deactivation PDCCH will be reversed. Then, if a UE fails to receive the deactivation PDCCH, it can continue to receive PDSCH after the deactivation PDCCH according the SPS transmission configuration, as the gNB will not transmit this PDSCH. In this example,. the UE will fail to receive the PDSCH and feed back NACK on the NACK-only feedback resource corresponding with the PDSCH after the deactivation PDCCH. In some implementations, the gNB receives NACK on the NACK-only feedback resource corresponding to the PDSCH after the deactivation PDCCH, it will retransmit the deactivation PDCCH.

In some embodiments, the feedback can be transmitted on PUCCH or PUSCH.

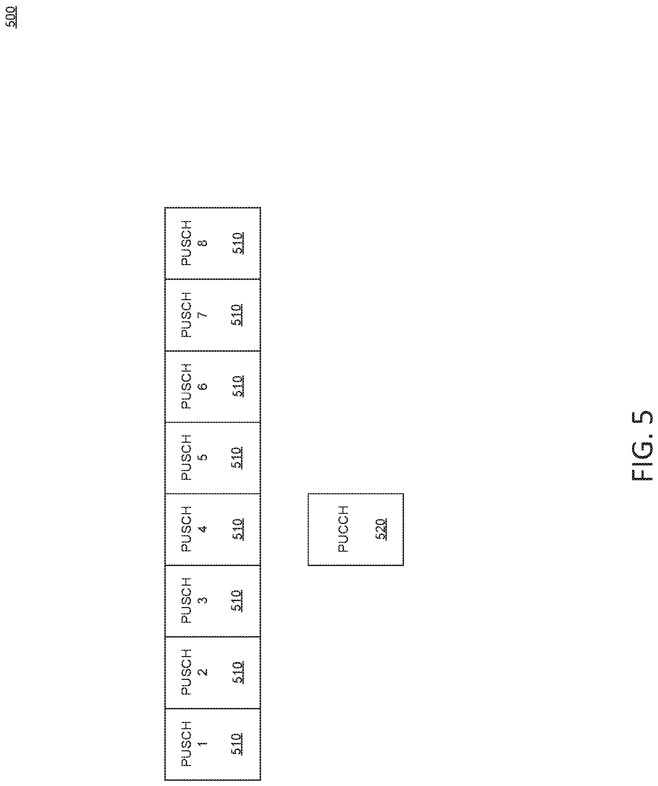

Fig. 5 illustrates an example PUCCH overlap with the PUSCH transmission with repetition, in accordance with present implementations. As illustrated by way of example in Fig. 5, an example system 500 includes a plurality of PUSCH 510, an an overlapping PUCCH 520.

In some implementations, the dynamic grant (DG) physical uplink shared channel (PUSCH) is scheduled by a downlink control information (e.g., downlink control information (DCI) carried by control channel. The configured grant (CG) PUSCH can be scheduled by radio resource control (RRC) signaling or configured by RRC signaling and further activated and deactivated by control information. The PUSCH type includes DG PUSCH and CG PUSCH.

For the uplink transmission (e.g., PUSCH), the UE can skip the uplink transmission. For example, if there is no available data for transmission, the UE does not transmit the PUSCH. This results in the medium access control (MAC) layer not generating or delivering the MAC protocol data unit (PDU) to the physical layer.

In some implementations, the transmission with repetition is configured for a UE by the network. The transmission includes a plurality of repetitions (also referred as to transmission occasions). A control channel (e.g., physical uplink control channel (PUCCH)) can overlap with at least one of the repetitions in the time domain. The UE cannot skip a set of the repetitions anyway. As a result, the MAC layer can generate or deliver PDU to the physical layer for the set of the repetitions even if there is no available data. The UE can transmit the set of the repetitions. The set of the repetitions can be determined by using the following non-limiting example methods.

In a first example method, the set of the repetitions comprise all the repetitions. Fig. 5 illustrates an example of a PUCCH overlap with the PUSCH transmission with repetition. As shown therein by way of example, the PUSCH transmission includes 8 repetitions denoted by PUSCH 1~8, respectively. The PUCCH overlaps with PUSCH 4 in the time domain. The UE cannot skip all the repetitions (e.g., PUSCH 1~8).

In a second example method, the set of the repetitions comprise the repetition that overlaps with the control channel in the time domain. Therefore, the PUSCH 4 cannot be skipped. The MAC layer can generate or deliver PDU for PUSCH 4 even if it has no available data.

In a third example method, the set of the repetitions comprise a repetition that overlaps with the control channel in the time domain and all the subsequent repetitions. Therefore, the PUSCH 4, PUSCH 5, PUSCH 6, PUSCH 7 and PUSCH 8 cannot be skipped. The MAC layer should generate or deliver PDU for PUSCH 4, PUSCH 5, PUSCH 6, PUSCH 7 and PUSCH 8 even if it has no available data.

In a fourth example method, the set of the repetitions comprise the last repetition with redundancy version 0 prior to the repetition that overlaps with the control channel and the subsequent repetitions. Assuming the configured RV for the repetitions are 0, 3, 0, 3, 0, 3, 0, 3, respectively. The RV for PUSCH 4 is 3 and RV for PUSCH 3 is 0. The PUSCH 3 is the last repetition with RV 0 prior to the PUSCH 4. Therefore, the set of the repetitions comprise PUSCH 3~8. If the PUSCH 5 with the RV 0 overlaps with the PUCCH in the time domain, the last repetition with RV 0 is PUSCH 5. Therefore, the set of the repetitions comprise PUSCH 5~8.

In a fifth example method, the set of the repetitions comprise the repetitions starting from the last repetition with redundancy version 0 prior to the repetition that overlaps with the control channel to the repetition that overlaps with the control channel. Therefore, the set of the repetitions comprise PUSCH 3 and PUSCH 4.

In a sixth example method, the set of the repetitions comprise the repetitions starting from the last repetition with redundancy version 0 prior to the repetition that overlaps with the control channel until the next repetition with RV 0. Note the next repetition with RV 0 is not included in the set of the repetitions. Therefore, the set of the repetitions comprise PUSCH 3 and PUSCH 4.

In a seventh example method, the set of the repetitions comprise all the repetitions if the control channel overlaps with the first repetition. If the control channel overlaps with the repetitions other than the first repetition, the PUSCH transmission can be skipped.

In some implementations, the method used for determining the set of the repetitions depends on the PUSCH type. For example, if the transmission with repetition is DG PUSCH, method 1 is used. If the transmission with repetition is DG PUSCH, method 2 is used.

In some implementations, the method used for determining the set of the repetitions depends on the overlapping between the repetition and the control channel. For example, if the control channel overlaps with the first repetition, the method 1 is used. If the control channel overlaps with the repetitions other than the first repetition, the method 4 is used.

In some implementations, the method used for determining the set of the repetitions depends on the control information (e.g., uplink control information (UCI)) carried by the control channel or the PUCCH resource. For example, if the control information includes at least periodic channel state information (CSI) report, the method 1 is used. If the control information includes only the hybrid automatic repeat request (HARQ) feedback, the method 4 is used. The control information includes periodic CSI, semi-Persistent CSI, HARQ feedback, scheduling request (SR), etc.

In some implementations, the method used for determining the set of the repetitions depends on any combination of the PUSCH type, the overlapping between the repetition and the control channel, and the control information carried by the control channel.

In addition, in some implementations, the PUSCH type, the overlapping between the repetition and the control channel, the control information, or any combination thereof determine whether the UE is able to skip the PUSCH. For example, if the transmission with repetition is DG PUSCH, the UE cannot skip the uplink transmission. If the transmission with repetition is CG PUSCH, the UE can skip the uplink transmission.

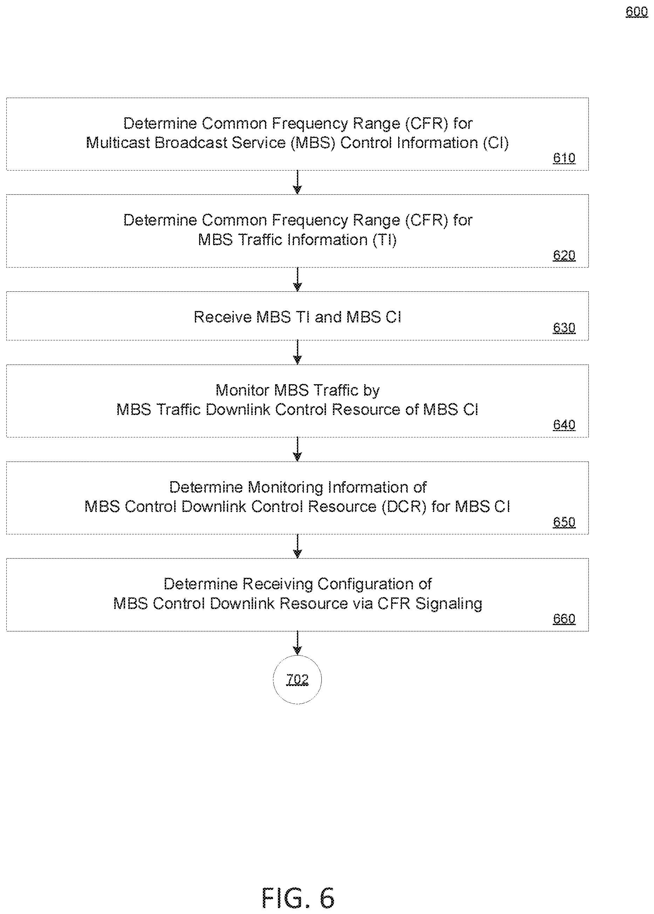

Fig. 6 illustrates an example method of resource configuration, in accordance with present implementations. In some implementations, at least a user equipment of the example system 100 performs method 600 according to present implementations. In some implementations, the method 600 begins at 610.

At 610, the example system determines a common frequency range (CFR) for multicast broadcast service (MBS) control information. The method 600 then continues to 620. At 620, the example system determined CFR for MBS traffic information. The method 600 then continues to 630. At 630, the example system receives one or more of MBS traffic information and MBS control information. The method 600 then continues to 640. At 640, the example system monitors MBS traffic by an MBS traffic control resource of MBS control information. The method 600 then continues to 650.

At 650, the example system determines monitoring information of an MBS control downlink control resource for MBS control information. The method 600 then continues to 660. At 660, the example system determines a receiving configuration of MBS control downlink resource via CFR signaling. The method 600 then continues to 702.

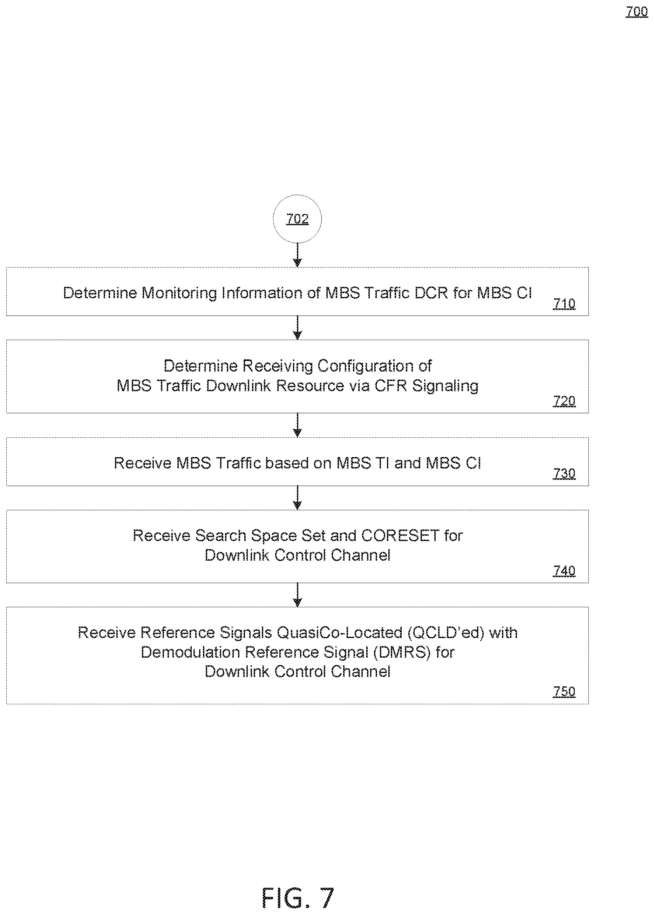

Fig. 7 illustrates an example method of resource configuration further to the example method of Fig. 7. In some implementations, at least a user equipment of the example system 100 performs method 700 according to present implementations. **In** some implementations, the method 700 begins at 702. The method 700 then continues to 710.

At 710, the example system determines monitoring information of MBS traffic downlink control resource for MBS control information. The method 700 then continues to 720. At 720, the example system determines a receiving configuration of at least one MBS traffic downlink resource via CFR signaling. The method 700 then continues to 730. At 730, the example system receives MBS traffic based on MBS traffic information and MBS control information. The method 700 then continues to 740.

At 740, the example system receives at least one search space set and at least one CORESET for at least one downlink control channel. It is to be understood that the downlink control channel can vary among a plurality of types of downlink control channel. The method 700 then continues to 750. At 750, the example system receives one or more reference signals quasi co-located with at least one demodulation reference signal (DMRS) for at least one downlink control channel. In some implementations, the method 700 ends at 750.

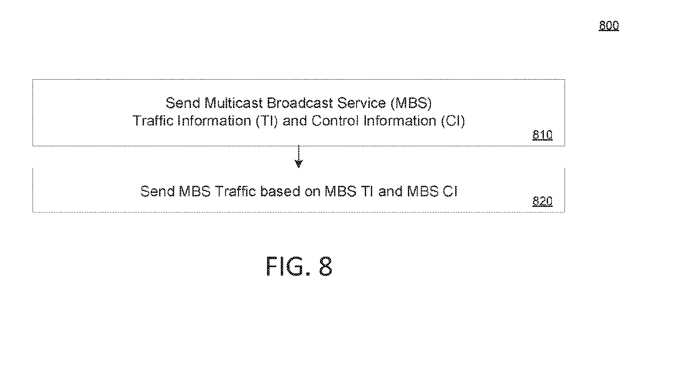

Fig. 8 illustrates a further example method of resource configuration, in accordance with present implementations. In some implementations, at least the a base station of the example system 100 performs method 800 according to present implementations. In some implementations, the method 800 begins at 810. At 810, the example system sends MBS traffic information and MBS control information. The method 800 then continues to 820. At 820, the example system sends MBS traffic based on the MBS traffic information and the MBS control information. In some implementations, the method 800 ends at 820.

The herein described subject matter sometimes illustrates different components contained within, or connected with, different other components. It is to be understood that such depicted architectures are illustrative, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It will be further understood by those within the art that if a specific number of an introduced claim recitation is intended, such an intent will be explicitly recited in the claim, and in the absence of such recitation, no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to the disclosure containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. **In** addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations).

Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general, such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

Further, unless otherwise noted, the use of the words "approximate," "about," "around," "substantially," etc., mean plus or minus ten percent.

The foregoing description of illustrative implementations has been presented for purposes of illustration and of description. It is not intended to be exhaustive or limiting with respect to the precise form disclosed, and modifications and variations are possible in light of the above teachings or may be acquired from practice of the disclosed implementations. It is intended that the scope of the disclosure be defined by the claims appended hereto and their equivalents.

## Claims

1. A wireless communication method, comprising:
receiving, by a wireless communication device from a base station, Multicast Broadcast Service, MBS, control information; and
determining, by the wireless communication device, a time domain window configuration for monitoring a MBS traffic downlink control resource via the MBS control information, wherein the time domain window configuration comprises a period of the time domain window, a length of the time domain window, and a starting point of the time domain window, and wherein the starting point of the time domain window is defined using an offset value using millisecond;
one of:
determining, by the wireless communication device, a Common Frequency Range, CFR, for the MBS control information and MBS traffic information, wherein the CFR equals to CORESET#0; or
determining, by the wireless communication device, the CFR for the MBS control information and the MBS traffic information from a System Information Block, SIB, wherein the CFR for the MBS control information and the MBS traffic information comprises, a starting Resource Block, RB, of the CFR and a number of RBs of the CFR;
receiving, by the wireless communication device from the base station, the MBS traffic information; and
receiving, by the wireless communication device from the base station, MBS traffic based on the MBS traffic information and the MBS control information.

2. A wireless communication apparatus, comprising:
at least one processor; and
at least one memory comprising processor executable code, wherein the processor executable code upon execution by the at least one processor configures the at least one processor to:
receive, from a base station, Multicast Broadcast Service, MBS, control information; and
determine a time domain window configuration for monitoring a MBS traffic downlink control resource via the MBS control information, wherein the time domain window configuration comprises a period of the time domain window, a length of the time domain window, and a starting point of the time domain window, and wherein the starting point of the time domain window is defined using an offset value using millisecond;
one of:
determine a Common Frequency Range, CFR, for the MBS control information and MBS traffic information, wherein the CFR equals to CORESET#0; or
determine the CFR for the MBS control information and the MBS traffic information from a System Information Block, SIB, wherein the CFR for the MBS control information and the MBS traffic information comprises, a starting Resource Block, RB, of the CFR and a number of RBs of the CFR;
receive, from the base station, MBS traffic information; and
receiving, from the base station, MBS traffic based on the MBS traffic information and the MBS control information.

3. A wireless communication method, comprising:
sending, by a base station to a wireless communication device, Multicast Broadcast Service, MBS, control information, wherein a time domain window configuration for monitoring a MBS traffic downlink control resource is configured via the MBS control information, and wherein the time domain window configuration comprises, a period of the time domain window, a length of the time domain window and a starting point of the time domain window, and wherein the starting point of the time domain window is defined using an offset value using millisecond;
one of:
determining, by the baes station, a Common Frequency Range, CFR, for the MBS control information and MBS traffic information, wherein the CFR equals to CORESET#0; or
determining, by the base station, a Common Frequency Range, CFR, for the MBS control information and the MBS traffic information, and sending a starting Resource Block, RB, of the CFR and a number of RBs of the CFR in a System Information Block, SIB;
sending, by the base station to the wireless communication device, MBS traffic information; and
sending, by the base station to the wireless communication device, MBS traffic based on the MBS traffic information and the MBS control information.

4. A wireless communication apparatus, comprising: at least one processor; and
at least one memory comprising processor executable code, wherein the processor executable code upon execution by the at least one processor configures the at least one processor to:
send, to a wireless communication device, Multicast Broadcast Service, MBS, control information, wherein a time domain window configuration for monitoring a MBS traffic downlink control resource is configured via the MBS control information, and wherein the time domain window configuration comprises, a period of the time domain window, a length of the time domain window and a starting point of the time domain window, and wherein the starting point of the time domain window is defined using an offset value using millisecond;
one of:
determine a Common Frequency Range, CFR, for the MBS control information and MBS traffic information, wherein the CFR equals to CORESET#0; or
determine a Common Frequency Range, CFR, for the MBS control information and the MBS traffic information, and sending a starting Resource Block, RB, of the CFR and a number of RBs of the CFR in a System Information Block, SIB;
send, to the wireless communication device, MBS traffic information; and
send, to the wireless communication device, MBS traffic based on the MBS
traffic information and the MBS control information.

## Patentansprüche

1. Drahtloses Kommunikationsverfahren, umfassend:
Empfangen, durch eine drahtlose Kommunikationsvorrichtung von einer Basisstation, von Multicast Broadcast Service-, MBS-, Steuerungsinformationen; und
Bestimmen, durch die drahtlose Kommunikationsvorrichtung, einer Zeitbereichsfensterkonfiguration zum Überwachen einer MBS-Verkehrs-Downlink-Steuerungsressource über die MBS-Steuerungsinformationen, wobei die Zeitbereichsfensterkonfiguration eine Periode des Zeitbereichsfensters, eine Länge des Zeitbereichsfensters und einen Startpunkt des Zeitbereichsfensters umfasst, und wobei der Startpunkt des Zeitbereichsfensters unter Verwendung eines Offsetwerts unter Verwendung von Millisekunden definiert wird;
eines von:
Bestimmen, durch die drahtlose Kommunikationsvorrichtung, eines gemeinsamen Frequenzbereichs, CFR, für die MBS-Steuerungsinformationen und MBS-Verkehrsinformationen, wobei der CFR gleich CORESET#0 ist; oder
Bestimmen, durch die drahtlose Kommunikationsvorrichtung, des CFR für die MBS-Steuerungsinformationen und die MBS-Verkehrsinformationen aus einem Systeminformationsblock, SIB, wobei der CFR für die MBS-Steuerungsinformationen und die MBS-Verkehrsinformationen einen Startressourcenblock, RB, des CFR und eine Anzahl von RBs des CFR umfasst;
Empfangen, durch die drahtlose Kommunikationsvorrichtung von der Basisstation, der MBS-Verkehrsinformationen; und
Empfangen, durch die drahtlose Kommunikationsvorrichtung von der Basisstation, von MBS-Verkehr basierend auf den MBS-Verkehrsinformationen und den MBS-Steuerungsinformationen.

2. Drahtlose Kommunikationseinrichtung, umfassend:
mindestens einen Prozessor; und
mindestens einen Speicher, umfassend prozessorausführbaren Code, wobei der prozessorausführbare Code bei Ausführung durch den mindestens einen Prozessor den mindestens einen Prozessor konfiguriert zum:
Empfangen, von einer Basisstation, von Multicast Broadcast Service-, MBS-, Steuerungsinformationen; und
Bestimmen einer Zeitbereichsfensterkonfiguration zum Überwachen einer MBS-Verkehrs-Downlink-Steuerungsressource über die MBS-Steuerungsinformationen, wobei die Zeitbereichsfensterkonfiguration eine Periode des Zeitbereichsfensters, eine Länge des Zeitbereichsfensters und einen Startpunkt des Zeitbereichsfensters umfasst, und wobei der Startpunkt des Zeitbereichsfensters unter Verwendung eines Offsetwerts unter Verwendung von Millisekunden definiert wird;
eines von:
Bestimmen eines gemeinsamen Frequenzbereichs, CFR, für die MBS-Steuerungsinformationen und MBS-Verkehrsinformationen, wobei der CFR gleich CORESET#0 ist; oder
Bestimmen des CFR für die MBS-Steuerungsinformationen und die MBS-Verkehrsinformationen aus einem Systeminformationsblock, SIB, wobei der CFR für die MBS-Steuerungsinformationen und die MBS-Verkehrsinformationen einen Startressourcenblock, RB, des CFR und eine Anzahl von RBs des CFR umfasst;
Empfangen, von der Basisstation, von MBS-Verkehrsinformationen; und
Empfangen, von der Basisstation, von MBS-Verkehr basierend auf den MBS-Verkehrsinformationen und den MBS-Steuerungsinformationen.

3. Drahtloses Kommunikationsverfahren, umfassend:
Senden, durch eine Basisstation an eine drahtlose Kommunikationsvorrichtung, von Multicast Broadcast Service-, MBS-, Steuerungsinformationen, wobei eine Zeitbereichsfensterkonfiguration zum Überwachen einer MBS-Verkehrs-Downlink-Steuerungsressource über die MBS-Steuerungsinformationen konfiguriert wird, und wobei die Zeitbereichsfensterkonfiguration eine Periode des Zeitbereichsfensters, eine Länge des Zeitbereichsfensters und einen Startpunkt des Zeitbereichsfensters umfasst, und wobei der Startpunkt des Zeitbereichsfensters unter Verwendung eines Offsetwerts unter Verwendung von Millisekunden definiert wird;
eines von:
Bestimmen, durch die Basisstation, eines gemeinsamen Frequenzbereichs, CFR, für die MBS-Steuerungsinformationen und MBS-Verkehrsinformationen, wobei der CFR gleich CORESET#0 ist; oder
Bestimmen, durch die Basisstation, eines gemeinsamen Frequenzbereichs, CFR, für die MBS-Steuerungsinformationen und die MBS-Verkehrsinformationen, und Senden eines Startressourcenblocks, RB, des CFR und einer Anzahl von RBs des CFR in einem Systeminformationsblock, SIB;
Senden, durch die Basisstation an die drahtlose Kommunikationsvorrichtung, von MBS-Verkehrsinformationen; und
Senden, durch die Basisstation an die drahtlose Kommunikationsvorrichtung, von MBS-Verkehr basierend auf den MBS-Verkehrsinformationen und den MBS-Steuerungsinformationen.

4. Drahtlose Kommunikationseinrichtung, umfassend:
mindestens einen Prozessor; und
mindestens einen Speicher, umfassend prozessorausführbaren Code, wobei der prozessorausführbare Code bei Ausführung durch den mindestens einen Prozessor den mindestens einen Prozessor konfiguriert zum:
Senden, an eine drahtlose Kommunikationsvorrichtung, von Multicast Broadcast Service-, MBS-, Steuerungsinformationen, wobei eine Zeitbereichsfensterkonfiguration zum Überwachen einer MBS-Verkehrs-Downlink-Steuerungsressource über die MBS-Steuerungsinformationen konfiguriert wird, und wobei die Zeitbereichsfensterkonfiguration eine Periode des Zeitbereichsfensters, eine Länge des Zeitbereichsfensters und einen Startpunkt des Zeitbereichsfensters umfasst, und wobei der Startpunkt des Zeitbereichsfensters unter Verwendung eines Offsetwerts unter Verwendung von Millisekunden definiert wird;
eines von:
Bestimmen eines gemeinsamen Frequenzbereichs, CFR, für die MBS-Steuerungsinformationen und MBS-Verkehrsinformationen, wobei der CFR gleich CORESET#0 ist; oder
Bestimmen eines gemeinsamen Frequenzbereichs, CFR, für die MBS-Steuerungsinformationen und die MBS-Verkehrsinformationen, und Senden eines Startressourcenblocks, RB, des CFR und einer Anzahl von RBs des CFR in einem Systeminformationsblock, SIB;
Senden, an die drahtlose Kommunikationsvorrichtung, von MBS-Verkehrsinformationen; und
Senden, an die drahtlose Kommunikationsvorrichtung, von MBS-Verkehr basierend auf den MBS-Verkehrsinformationen und MBS-Steuerungsinformationen.

## Revendications

1. Procédé de communication sans fil, comprenant :
la réception, par un dispositif de communication sans fil en provenance d'une station de base, d'informations de commande de service de diffusion en multidiffusion, MBS ; et
la détermination, par le dispositif de communication sans fil, d'une configuration de fenêtre dans le domaine temporel pour surveiller une ressource de commande de liaison descendante de trafic MBS par l'intermédiaire des informations de commande MBS, dans lequel la configuration de fenêtre dans le domaine temporel comprend une période de la fenêtre dans le domaine temporel, une longueur de la fenêtre dans le domaine temporel et un point de début de la fenêtre dans le domaine temporel, et dans lequel le point de début de la fenêtre dans le domaine temporel est défini à l'aide d'une valeur de décalage exprimée en millisecondes ;
l'une parmi :
la détermination, par le dispositif de communication sans fil, d'une plage de fréquences communes, CFR, pour les informations de commande MBS et des informations de trafic MBS, dans lequel la CFR est égale à CORESET#0 ; ou
la détermination, par le dispositif de communication sans fil, de la CFR pour les informations de commande MBS et les informations de trafic MBS à partir d'un bloc d'informations système, SIB, dans lequel la CFR pour les informations de commande MBS et les informations de trafic MBS comprend un bloc de ressources, RB, de début de la CFR et un nombre de RB de la CFR ;
la réception, par le dispositif de communication sans fil en provenance de la station de base, des informations de trafic MBS ; et
la réception, par le dispositif de communication sans fil en provenance de la station de base, d'un trafic MBS sur la base des informations de trafic MBS et des informations de commande MBS.

2. Appareil de communication sans fil, comprenant :
au moins un processeur ; et
au moins une mémoire comprenant un code exécutable par processeur, dans lequel le code exécutable par processeur, lors d'une exécution par l'au moins un processeur, configure l'au moins un processeur pour :
recevoir, en provenance d'une station de base, des informations de commande de service de diffusion en multidiffusion, MBS ; et
déterminer une configuration de fenêtre dans le domaine temporel pour surveiller une ressource de commande de liaison descendante de trafic MBS par l'intermédiaire des informations de commande MBS, dans lequel la configuration de fenêtre dans le domaine temporel comprend une période de la fenêtre dans le domaine temporel, une longueur de la fenêtre dans le domaine temporel et un point de début de la fenêtre dans le domaine temporel, et dans lequel le point de début de la fenêtre dans le domaine temporel est défini à l'aide d'une valeur de décalage exprimée en millisecondes ;
l'un parmi :
le fait de déterminer une plage de fréquences communes, CFR, pour les informations de commande MBS et les informations de trafic MBS, dans lequel la CFR est égale à CORESET#0 ; ou
le fait de déterminer la CFR pour les informations de commande MBS et les informations de trafic MBS à partir d'un bloc d'informations système, SIB, dans lequel la CFR pour les informations de commande MBS et les informations de trafic MBS comprend un bloc de ressources, RB, de début de la CFR et un nombre de RB de la CFR ;
le fait de recevoir, en provenance de la station de base, des informations de trafic MBS ; et
le fait de recevoir, en provenance de la station de base, un trafic MBS sur la base des informations de trafic MBS et des informations de commande MBS.

3. Procédé de communication sans fil, comprenant :
l'envoi, par une station de base à un dispositif de communication sans fil, d'informations de commande de service de diffusion en multidiffusion, MBS, dans lequel une configuration de fenêtre dans le domaine temporel pour surveiller une ressource de commande de liaison descendante de trafic MBS est configurée par l'intermédiaire des informations de commande MBS, et dans lequel la configuration de fenêtre dans le domaine temporel comprend une période de la fenêtre dans le domaine temporel, une longueur de la fenêtre dans le domaine temporel et un point de début de la fenêtre dans le domaine temporel, et dans lequel le point de début de la fenêtre dans le domaine temporel est défini à l'aide d'une valeur de décalage exprimée en millisecondes ;
l'une parmi :
la détermination, par la station base, d'une plage de fréquences communes, CFR, pour les informations de commande MBS et les informations de trafic MBS, dans lequel la CFR est égale à CORESET#0 ; ou
la détermination, par la station de base, d'une plage de fréquences communes, CFR, pour les informations de commande MBS et les informations de trafic MBS, et l'envoi d'un bloc de ressources, RB, de début de la CFR et d'un nombre de RB de la CFR dans un bloc d'informations système, SIB ;
l'envoi, par la station de base au dispositif de communication sans fil, d'informations de trafic MBS ; et
l'envoi, par la station de base au dispositif de communication sans fil, d'un trafic MBS sur la base des informations de trafic MBS et des informations de commande MBS.

4. Appareil de communication sans fil, comprenant :
au moins un processeur ; et
au moins une mémoire comprenant un code exécutable par processeur, dans lequel le code exécutable par processeur, lors d'une exécution par l'au moins un processeur, configure l'au moins un processeur pour :
envoyer, à un dispositif de communication sans fil, des informations de commande de service de diffusion en multidiffusion, MBS, dans lequel une configuration de fenêtre dans le domaine temporel pour surveiller une ressource de commande de liaison descendante de trafic MBS est configurée par l'intermédiaire des informations de commande MBS, et dans lequel la configuration de fenêtre dans le domaine temporel comprend une période de la fenêtre dans le domaine temporel, une longueur de la fenêtre dans le domaine temporel et un point de début de la fenêtre dans le domaine temporel, et dans lequel le point de début de la fenêtre dans le domaine temporel est défini à l'aide d'une valeur de décalage exprimée en millisecondes ;
l'un parmi :
le fait de déterminer une plage de fréquences communes, CFR, pour les informations de commande MBS et les informations de trafic MBS, dans lequel la CFR est égale à CORESET#0 ; ou
le fait de déterminer une plage de fréquences communes, CFR, pour les informations de commande MBS et les informations de trafic MBS, et le fait d'envoyer un bloc de ressources, RB, de début de la CFR et un nombre de RB de la CFR dans un bloc d'informations système, SIB ;
le fait d'envoyer, au dispositif de communication sans fil, des informations de trafic MBS ; et
le fait d'envoyer, au dispositif de communication sans fil, un trafic MBS sur la base des informations de trafic MBS et des informations de commande MBS.
